(19) Europäisches Patentamt
European Patent Office
Office européen des brevets

(11) Veröffentlichungsnummer : **0 464 840 B1**

(12) **EUROPÄISCHE PATENTSCHRIFT**

(45) Veröffentlichungstag der Patentschrift :
04.05.94 Patentblatt 94/18

(51) Int. Cl.$^5$ : **C09K 5/04, F25B 15/02**

(21) Anmeldenummer : **91111207.6**

(22) Anmeldetag : **05.07.91**

(54) **Stoffgemische für Absorptionswärmepumpen and Absorptionswärmetransformatoren.**

(30) Priorität : **06.07.90 DE 4021582**

(43) Veröffentlichungstag der Anmeldung :
**08.01.92 Patentblatt 92/02**

(45) Bekanntmachung des Hinweises auf die
Patenterteilung :
**04.05.94 Patentblatt 94/18**

(84) Benannte Vertragsstaaten :
**BE CH DE DK ES FR GB IT LI LU NL SE**

(56) Entgegenhaltungen :
**US-A- 2 308 665
US-A- 2 357 431
US-A- 4 199 461
PATENT ABSTRACTS OF JAPAN, (TORAY IND
INC), 11. Juni 1981; & JP-A-56 070 081
PATENT ABSTRACTS OF JAPAN, (TORAY
KK), 21. Januar 1986; & JP-A-61 012 782
PATENT ABSTRACTS OF JAPAN, (MASUDA
KEIZO), 13. Juni 1981; & JP-A-56 070 833**

(73) Patentinhaber : **HOECHST
AKTIENGESELLSCHAFT
D-65926 Frankfurt (DE)**

(72) Erfinder : **Stüven, Uwe
Im Hopfengarten 35
W-6232 Bad Soden am Taunus (DE)**
Erfinder : **Schmidt, Adolf, Dr.
Hainerweg 23
W-6238 Hofheim am Taunus (DE)**
Erfinder : **Strohmeyer, Eckhard
Zum Zimmerplatz 2
W-6239 Eppstein/Taunus (DE)**
Erfinder : **Himmler, Klaus
Kellerstrasse 11
W-6200 Wiesbaden (DE)**

EP 0 464 840 B1

**Beschreibung**

Die vorliegende Erfindung betrifft Stoffgemische, die in Absorptionswärmepumpen und Absorptionswärmetransformatoren zur Temperaturerhöhung von Wärmeströmen auf höherem Temperaturniveau eingesetzt werden können.

Mit der Absorptionswärmepumpe läßt sich ein Wärmestrom von niedrigem oder mittlerem Temperaturniveau durch Zufuhr von Energie auf ein höheres Temperaturniveau transformieren. Beim umgekehrten Absorptionskreisprozess, dem Wärmetransformator, geschieht die Temperaturanhebung ohne nennenswerte Zufuhr von Energie allein aus der Nutzung und quasi Disproportionierung eines auf mittlerem Temperaturniveau anfallenden Wärmestroms. Dementsprechend sind die Leistungsziffern einer Absorptionswärmepumpe, d.h. Nutzleistung im Verhältnis zur zugeführten Wärme, immer > 1; diejenigen des Absorptionswärmetransformators < 1. Der Synproportionierung von Abwärme und zugeführter Energie bei der Wärmepumpe steht die Disproportionierung ohne großen Bedarf an Zusatzenergie der Abwärme beim Wärmetransformator gegenüber.

Für beide Prozesse sind bereits Stoffgemische bekannt. Sie basieren in der Regel auf einer nicht idealen physikalischen Löslichkeit einer leichtsiedenden Komponente in einer schwersiedenden Komponente. Der Wärmegewinn beim Absorptionsprozeß resultiert also fast vollständig aus der frei werdenden Kondensationswärme der leichtsiedenden Komponente. Zur Übertragung und Transformation großer Wärmeströme sind bislang solche Stoffgemische ausgewählt worden, die aus einem Leichtsieder mit möglichst großer Kondensationswärme gelöst in einem Schwersieder bestehen, der möglichst große Entgasungsbreiten zuläßt (Ammoniak/Wasswe, Wasser/Lithiumbromid, Gemische halogenierter Kohlenwasserstoffe, Methanol/Polyethylenglycoldimethylether).

Ammoniak ist auf Grund seines sehr hohen Dampfdrucks auf einen relativ niedrigen Temperaturbereich beschränkt (126,5°C bei 100 bar). Bei höheren Temperaturen ist der sicherheitstechnische und apparative Aufwand wirtschaftlich nicht mehr zu vertreten. Das Gemisch Wasser-Lithiumbromid eignet sich für den Arbeitsbereich unter 150°C. Oberhalb dieser Temperatur sind Korrosion und Kristallisationsgefahr nicht mehr beherrschbar. Stoffgemische mit organischen Komponenten wie Methanol oder Trifluorethanol als Leichtsieder und Polyethylenglykoldimethylether als Schwersieder eignen sich auf Grund der Löslichkeitsverhältnisse (Entgasungsbreite) ebenfalls nur für den Temperaturbereich bis ca. 160°C. Auch der Einsatz von halogenierten Kohlenwasserstoffgemischen ist auf Grund der Löslichkeiten in Verbindung mit relativ kleinen Kondensationswärmen auf den Betrieb bei relativ niedrigen Temperaturen beschränkt.

Der Erfindung liegt demnach die Aufgabe zugrunde, Arbeitsstoffgemische für Absorptionswärmepumpen und Absorptionswärmetransformatoren zu schaffen, die sich im Vakuum bzw. bei Normaldruck und mittlerer bis höherer Temperatur (100-160°) desorbieren und kondensieren und bis maximal 12 bar und höherer bis hoher Temperatur (140-240°) verdampfen und absorbieren lassen und mehr Wärme pro spezifischem Arbeitsmittelumlauf transportieren als die bekannten Stoffgemische. Weitere Anforderungen wie geringe Korrosivität, thermische Stabilität und Verfügbarkeit in ausreichenden Mengen für technische Anlagen sollen ebenfalls erfüllt werden.

Es wurde nun gefunden, daß Stoffgemische bestehend aus mindestens einem tertiären Amin als Arbeitsmittel und mindestens einer aliphatischen Monocarbonsäure mit 8 bis 18 Kohlenstoffatomen als Lösemittel diese Forderungen erfüllen.

Das tertiäre Amin kann aus der Gruppe bestehend aus Triethylamin, Pyridin, N-Methylpyrrolidin, N-Methylpyrrol, N-Methylpiperidin, N-Methylmorpholin, 2-, 3- oder 4-Methylpyridin ausgewählt sein, die aliphatische Carbonsäure aus der Gruppe bestehend aus Isononansäure, Caprylsäure, Pelargonsäure, Caprinsäure, Laurinsäure, Myristinsäure, Palmitinsäure oder Stearinsäure.

Das Arbeitsmittel kann aus einem Amin der vorstehend genannten tertiären Aminen oder deren Gemisch bestehen ebenso das Lösemittel aus einer der vorstehend genannten aliphatischen Monocarbonsäuren oder deren Gemisch.

Der Vorteil der erfindungsgemäßen Stoffgemische ist im wesentlichen darin zu sehen, daß bei der Absorption des Amins neben der Kondensationswärme ein beachtlicher Betrag an Lösungswärme frei wird, so daß pro kg Arbeitsmittel erheblich mehr Wärme als bei dem bekannten Stoffpaaren freigesetzt werden kann, wodurch sich die umzuwälzende Stoffmenge verringert. Dadurch können kleiner Apparaturen verwendet werden, was die Investitionskosten senkt.

In der Tabelle 1 sind für verschiedene Abwärmetemperaturen und Nutztemperaturen für das Stoffpaar Triethylamin/Isonansäure die Anteile der Kondensations- und Lösungswärme an der gesamten Nutzwärme für einen Wärmetransformatorprozess aufgetragen. Bei höheren Temperaturen kann der Anteil der Lösungswärme bis ca. 70 % der Nutzwärme betragen.

**Tabelle 1**

| Abwärme-temperatur (Aus-treiber) °C | Nutzwärme-temperatur (Absorber) °C | Nutz-wärme % | Konden-sations-wärme % | Lösungs-wärme % | spez. Lösungs-umlauf f |
|---|---|---|---|---|---|
| 100 | 120 | 100 | 74 | 26 | 2 |
| 100 | 140 | 100 | 58 | 42 | 3,5 |
| 100 | 160 | 100 | 47 | 53 | 6 |
| 120 | 140 | 100 | 77 | 23 | 2 |
| 120 | 160 | 100 | 60 | 40 | 2,5 |
| 120 | 180 | 100 | 47 | 53 | 4 |
| 120 | 200 | 100 | 38 | 62 | 6 |
| 140 | 180 | 100 | 59 | 41 | 2 |
| 140 | 200 | 100 | 46 | 54 | 3 |
| 140 | 220 | 100 | 36 | 64 | 4,5 |
| 140 | 240 | 100 | 29 | 71 | 7 |
| 160 | 200 | 100 | 59 | 41 | 2 |
| 160 | 220 | 100 | 45 | 55 | 2,5 |
| 160 | 240 | 100 | 35 | 65 | 3 |
| 160 | 260 | 100 | 26 | 74 | 4,5 |

Der Vorteil der Nutzung der Lösungswärme wird beim Vergleich verschiedener Stoffgemische in einem Musterkreisprozeß deutlich (Tabelle 2).

Tabelle 2

| | Wasser/ LiBr | MeOH/ PEGDME 250 | TEA/ Isononan- säure | Pyridin/ Isononan- säure |
|---|---|---|---|---|
| Abwärmetemp. °C (Austreiber, Verdampfer) | 80 - 110 | 70 - 100 | 100 - 160 | 80-160 |
| Nutztemperatur °C (Absorber) | 120 - 150 | 90 - 170 | 140 - 240 | 120-240 |
| Entgasungsbreite % | 5 - 10 | 3 - 6 | 10 - 30 | 5- 35 |
| spez. Lösungsumlauf | 7 - 15 | 15 - 30 | 2 - 9 | 2- 12 |
| Wirkungsgrad (Nutzwärme/Abwärme) | max. 0,5 | max. 0,42 | max. 0,35 | max. 0,35 |
| Systemdruck Absorber in bar | 0,5 - 1 | 1 - 3,5 | 1 - 5 | 0,3-3,5 |
| Systemdruck Austreiber in bar | 0,02-0,06 | 0,2-0,3 | 0,1-0,4 | 0,03-0,15 |

```
LiBr   = Lithiumbromid
MeOH   = Methanol
PEGDME = Polyethylenglycoldimethylether
TEA    = Triethylamin
```

Die Erfindung wird im folgenden an Hand der Figuren näher erläutert. Es zeigt:

Figur 1        den Absorptionswärmepumpenprozeß stark vereinfacht und

Figur 2        den Absorptionswärmetransformatorprozeß stark vereinfacht.

Der Wärmefluß in das System und aus dem System wird in beiden Prozessen mit Q bezeichnet und durch Pfeilrichtung angegeben. Die Lage der Mittelpunkte der schematisch dargestellten Anlagenteile Austreiber, Kondensator, Verdampfer und Absorber im gezeichneten Koordinatensystem veranschaulicht grob die Arbeitsbedingungen hinsichtlich Druck- und Temperaturniveau für den jeweiligen Prozeß.

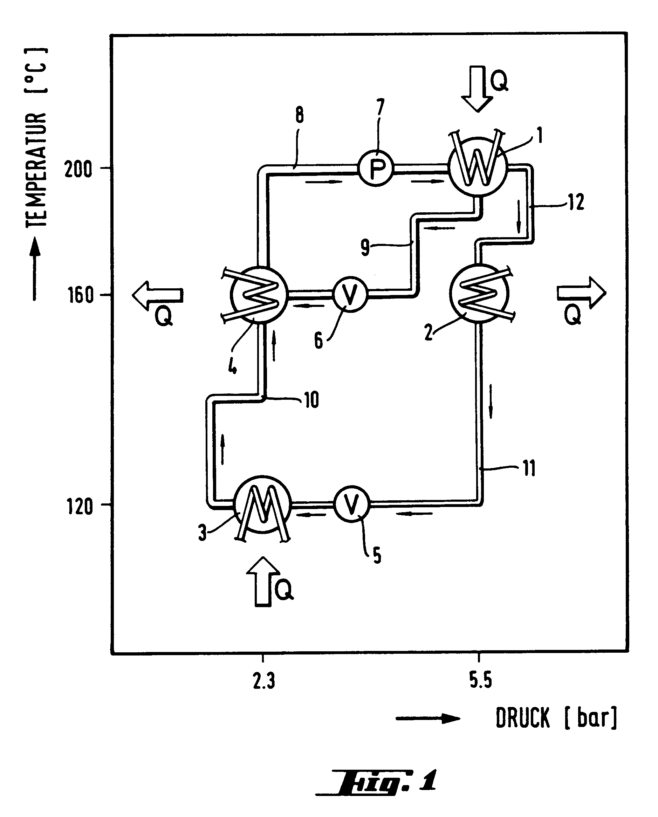

Beim Absorptionswärmepumpenprozeß (Figur 1) wird das Arbeitsmittel des Stoffgemisches durch Zufuhr von Wärme (z.B. Dampf oder elektrische Energie) von 140°C bis 240°C, vorzugsweise von 160°C bis 200°C und bei Drücken von 4 bar bis 12 bar, vorzugsweise 5 bar bis 8 bar durch Verdampfen im Austreiber 1 aus dem Stoffgemisch ausgetrieben. Der Arbeitsmitteldampf gelangt über Leitung 12 in den Kondensator 2, wo unter Abfuhr von Wärme der Arbeitsmitteldampf bei unverändertem Druck bei Temperaturen von 150°C bis 200°C, vorzugsweise bei 160°C bis 180°C verflüssigt wird. Das verflüssigte Arbeitsmittel gelangt über Leitung 11 und Expansionsventil 5 in den Verdampfer 3, wo es unter Zufuhr von Abwärme von 100°C bis 160°C, vorzugsweise von 120°C bis 140°C und bei Drücken von 1 bar bis 6 bar, vorzugsweise von 2 bar bis 3 bar verdampft wird. Das an Arbeitsmittel verarmte Lösemittel wird über Leitung 9 und Expansionsventil 6 vom Austreiber 1 in den Absorber 4 geleitet. Über Leitung 10 gelangt der Arbeitsmitteldampf in den Absorber 4, wo er unter Abfuhr von Wärme bei Temperaturen von 150°C bis 200°C im auf gleichen Druck entspannten Lösemittel absorbiert wird. Das mit Arbeitsmittel angereicherte Lösemittel wird über Leitung 8 und Pumpe 7 in den Austreiber 1 gefördert. Ein neuer Arbeitszyklus beginnt.

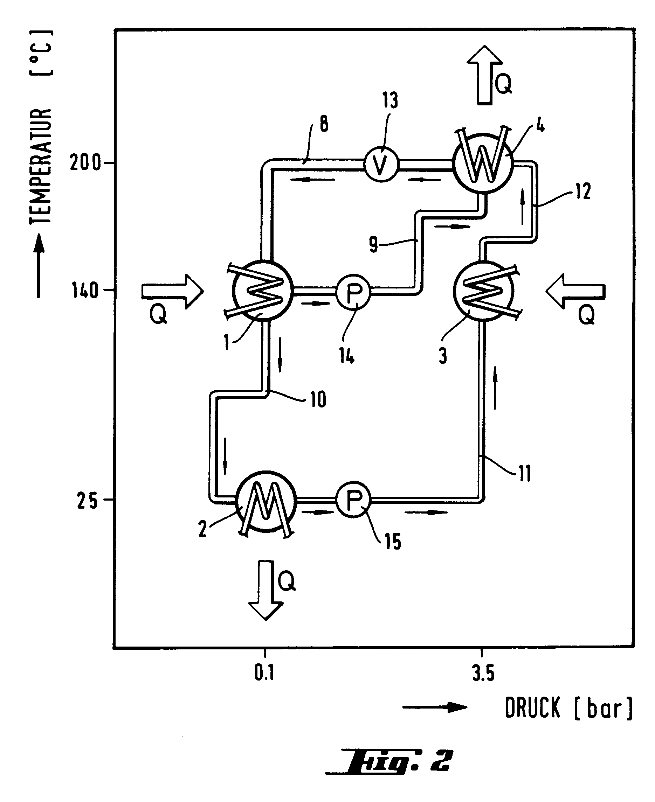

Bei dem Absorptionswärmetransformatorprozeß (Figur 2) wird im Verdampfer 3 durch Aufnahme von Wärme das Arbeitsmittel bei Temperaturen von 100°C bis 160°C, vorzugsweise von 120°C bis 140°C und Drücken von 1,3 bar bis 5,5 bar, vorzugsweise 2,3 bar bis 3,5 bar verdampft. Der Arbeitsmitteldampf gelangt über Leitung 12 in den Absorber 4 und löst sich dort im Lösemittel bei gleichem Druck unter Abgabe von Nutzwärme bei Temperaturen zwischen 140°C und 240°C, vorzugsweise zwischen 160°C und 220°C. Das mit Arbeitsmittel angereicherte Lösemittel gelangt über Leitung 8 und Expansionsventil 13 in den Austreiber 1. Das Austreiben des Arbeitsmittels aus dem Stoffgemisch erfolgt unter Zufuhr von Abwärme bei Temperaturen von 100°C bis 160°C, vorzugsweise von 120°C bis 140°C und Drücken von 0,1 bar bis 0,4 bar, vorzugsweise von 0,1 bar bis 0,2 bar. Das desorbierte Arbeitsmittel gelangt über Leitung 10 in den Kondensator 2, wo der Arbeitsmitteldampf bei Temperaturen von 0°C bis 30°C, vorzugsweise Zimmertemperatur und Drücken von 0,1 bar bis 0,4 bar verflüssigt wird. Die dabei frei werdende Kondensationswärme geht verloren und bildet den Antrieb des Wärmetransformators. Vom Kondensator 2 wird das flüssige Arbeitsmittel mit Pumpe 14 unter Druckerhöhung über Leitung 11 in den Verdampfer 3 gepumpt. Die im Austreiber 1 durch die Desorption von Arbeitsmittel an Arbeitsmittel verarmte Lösung wird unter Druckerhöhung mit Pumpe 15 über Leitung 9 zurück in den Absorber 4 gepumpt und kann dort wieder Arbeitsmitteldampf aus dem Verdampfer 3 aufnehmen.

## Patentansprüche

1. Stoffgemisch zur Verwendung in Absorptionswärmepumpen und Absorptionswärmetransformatoren bestehend aus mindestens einem tertiären Amin als Arbeitsmittel und mindestens einer aliphatischen Monocarbonsäure mit 8 - 18 Kohlenstoffatomen als Lösemittel.

2. Stoffgemisch gemäß Anspruch 1, dadurch gekennzeichnet, daß das tertiäre Amin ausgewählt ist aus der Gruppe bestehend aus Triethylamin, Pyridin, N-Methypyrrolidin, N-Methylpyrrol, N-Methylpiperidin, N-Methylmorpholin, 2-, 3- oder 4-Methylpyridin.

3. Stoffgemisch gemäß Anspruch 1 oder 2, dadurch gekennzeichnet, daß die aliphatische Carbonsäure ausgewählt ist aus der Gruppe bestehend aus Iononansäure, Caprylsäure, Pelargonsäure, Caprinsäure, Laurinsäure, Myristinsäure, Palmitinsäure oder Stearinsäure.

4. Stoffgemisch gemäß Anspruch 1, dadurch gekennzeichnet, daß das Arbeitsmittel aus einem Gemisch aus tertiären Aminen und/oder das Lösemittel aus einem Gemisch aus aliphatischen Monocarbonsäuren besteht.

5. Verwendung eines Stoffgemisches bestehend aus mindestens einem tertiären Amin als Arbeitsmittel und mindestens einer aliphatischen Monocarbonsäure mit 8 - 18 Kohlenstoffatomen in einem Absorptionswärmetransformator.

6. Verwendung eines Stoffgemisches bestehend aus mindestens einem tertiären Amin als Arbeitsmittel und mindestens einer aliphatischen Monocarbonsäure mit 8 - 18 Kohlenstoffatomen in einer Absorptionswärmepumpe.

7. Verfahren zum Anheben der Temperatur einer Abwärmequelle auf ein höheres Niveau mittels Absorptionswärmepumpe mit einem Stoffgemisch gemäß Anspruch 1 bestehend aus Arbeitsmittel und Lösemittel, dadurch gekennzeichnet, daß man das Arbeitsmittel des Stoffgemisches durch Zufuhr von Wärme von 140°C bis 240°C bei Drücken von 4 bis 12 bar durch Verdampfen aus dem Stoffgemisch austreibt, den Arbeitsmitteldampf unter Abfuhr von Wärme bei Temperaturen von 150°C bis 200°C verflüssigt, die Flüssigkeit entspannt und mittels Zufuhr von Abwärme von 100°C bis 160°C bei Drücken von 1 bar bis 6 bar verdampft, den Dampf unter Abfuhr von Wärme bei Temperaturen von 150°C bis 200°C im entspannten Lösemittel absorbiert und das mit Arbeitsmittel angereicherte Lösemittel unter Druckerhöhung auf 4 bar bis 12 bar dem Austreiber zuführt.

8. Verfahren zum Anheben der Temperatur einer Abwärmequelle auf ein höheres Niveau mittels Absorptionswärmetransformator mit einem Stoffgemisch gemäß Anspruch 1 bestehend aus Arbeitsmittel und Lösemittel, dadurch gekennzeichnet, daß man das Arbeitsmittel des Stoffgemisches durch Zufuhr von Abwärme von 100°C bis 160°C bei Drücken von 1,3 bis 5,5 bar verdampft, den Dampf unter Abfuhr von Wärme bei Temperaturen von 140°C bis 240°C im Lösemittel absorbiert, das mit Arbeitsmittel angereicherte Lösemittel expandiert, das mit Arbeitsmittel durch Zufuhr von Abwärme bei Temperaturen von 100°C bis 160°C und Drücken von 0,1 bar bis 0,4 bar aus dem angereicherten Lösemittel austreibt und unter Abfuhr von Wärme bei Temperaturen von 0°C bis 30°C kondensiert, das flüssige Arbeitsmittel unter Druckerhöhung auf 1,3 bar bis 5,5 bar der Verdampfung und das an Arbeitsmittel verarmte Lösemittel unter Druckerhöhung auf 1,3 bar bis 5,5 bar der Absorption zuführt.

9. Verfahren nach Anspruch 7, dadurch gekennzeichnet, daß man als Stoffgemisch Triethylamin und Isononansäure einsetzt.

10. Verfahren nach Anspruch 8, dadurch gekennzeichnet, daß man als Stoffgemisch Triethylamin und Isononansäure einsetzt.

## Claims

1. A mixture of substances for use in absorption heat pumps and absorption heat transformers, composed of at least one tertiary amine as the working medium and at least one aliphatic monocarboxylic acid having 8-18 carbon atoms as the solvent.

2. A mixture of substances as claimed in claim 1, wherein the tertiary amine is selected from the group comprising triethylamine, pyridine, N-methylpyrrolidine, N-methylpyrrole, N-methylpiperidine, N-methylmorpholine and 2-, 3- or 4-methylpyridine.

3. A mixture of substances as claimed in claim 1 or 2, wherein the aliphatic carboxylic acid is selected from the group comprising isononanoic acid, caprylic acid, pelargonic acid, capric acid, lauric acid, myristic acid, palmitic acid or stearic acid.

4. A mixture of substances as claimed in claim 1, wherein the working medium is composed of a mixture of tertiary amines and/or the solvent is composed of a mixture of aliphatic monocarboxylic acids.

5. The use of a mixture of substances composed of at least one tertiary amine as the working medium and at least one aliphatic monocarboxylic acid having 8-18 carbon atoms in an absorption heat transformer.

6. The use of a mixture of substances composed of at least one tertiary amine as the working medium and at least one aliphatic monocarboxylic acid having 8-18 carbon atoms in an absorption heat pump.

7. A process for raising the temperature of a waste heat source to a higher level by means of an absorption heat pump, using a mixture of substances as claimed in claim 1, composed of working medium and solvent, which comprises stripping the working medium out of the mixture of substances by vaporization by means of supplying heat of 140°C to 240°C at pressures of 4 to 12 bar, liquefying the working medium vapor with removal of heat at temperatures of 150°C to 200°C, expanding the liquid and vaporizing it by means of supplying waste heat of 100°C to 160°C at pressures of 1 bar to 6 bar, absorbing the vapor in the expanded solvent with removal of heat at temperatures of 150°C to 200°C and feeding the solvent enriched in working medium to the stripper while raising the pressure to 4 bar to 12 bar.

8. A process for raising the temperature of a waste heat source to a higher level by means of an absorption heat transformer, using a mixture of substances as claimed in claim 1, composed of working medium and solvent, which comprises vaporizing the working medium of the mixture of substances by supplying waste heat of 100°C to 160°C at pressures of 1.3 to 5.5 bar, absorbing the vapor in the solvent with heat removal at temperatures of 140°C to 240°C, expanding the solvent enriched in working medium, stripping the working medium out of the enriched solvent by supplying waste heat at temperatures of 100°C to 160°C and pressures of 0.1 bar to 0.4 bar and condensing it with removal of heat at temperatures of 0°C to 30°C, feeding the liquid working medium to the vaporization while raising the pressure to 1.3 bar to 5.5 bar and feeding the solvent depleted of working medium to the absorption while raising the pressure to 1.3 bar to 5.5 bar.

9. The process as claimed in claim 7, wherein triethylamine and isononanoic acid are used as the mixture of substances.

10. The process as claimed in claim 8, wherein triethylamine and isononanoic acid are used as the mixture of substances.

**Revendications**

1. Mélange de substances pour utilisation dans les transformateurs de chaleur par absorption et les pompes à chaleur par absorption, consistant en au moins une amine tertiaire en tant qu'agent de transport et en au moins un acide monocarboxylique aliphatique comportant de 8 à 18 atomes de carbone comme solvant.

2. Mélange de substances selon la revendication 1, **caractérisé** en ce que l'amine tertiaire est choisie dans le groupe formé par la triéthylamine, la pyridine, la N-méthylpyrrolidine, le N-méthylpyrrol, la N-méthylpipéridine, la N-méthylmorpholine, et les 2- 3- ou 4-méthylpyridines.

3. Mélange de substances selon la revendication 1 ou 2, **caractérisé** en ce que l'acide carboxylique aliphatique est choisi dans le groupe formé par l'acide isononanoïque, l'acide caprylique, l'acide pélargonique, l'acide caprique, l'acide laurique, l'acide myristique, l'acide palmitique et l'acide stéarique.

4. Mélange de substances selon la revendication 1, **caractérisé** en ce que l'agent de transport consiste en un mélange d'amines tertiaires et/ou le solvant consiste en un mélange d'acides monocarboxyliques aliphatiques.

5. Utilisation d'un mélange de substances consistant en au moins une amine tertiaire utilisée comme agent de transport et en au moins un acide monocarboxylique aliphatique comportant de 8 à 18 atomes de carbone , dans un transformateur de chaleur par absorption.

6. Utilisation d'un mélange de substances consistant en au moins une amine tertiaire utilisée comme agent de transport et en au moins un acide monocarboxylique aliphatique comportant de 8 à 18 atomes de carbone, dans une pompe à chaleur à absorption.

7. Procédé pour élever la température d'une source de chaleur perdue à un niveau supérieur, au moyen d'une pompe à chaleur par absorption, utilisant un mélange de substances selon la revendication 1, consistant en un agent de transport et en un solvant, **caractérisé** en ce que l'agent de transport du mélange de substances est séparé du mélange de substances par apport de chaleur le tout à une température comprise entre 140°C et 240°C, sous des pressions comprises entre 4 et 12 bars, par évaporation, en ce que la vapeur d'agent de transport est liquéfiée avec libération de chaleur à des températures comprises entre 150°C et 200°C, en ce que l'on effectue une détente du liquide et en ce que l'on effectue une évaporation de ce liquide au moyen d'un apport de chaleur perdue, à des températures comprises entre 100°C et 160°C, sous des pressions comprises entre 1 bar et 6 bars, en ce que la vapeur est absorbée dans le solvant détendu avec libération de chaleur à des températures comprises entre 150°C et 200°C, et en ce que le solvant enrichi en agent de transport est conduit vers le séparateur avec une élévation de pression jusqu'à 4 bars à 12 bars.

8. Procédé pour élever la température d'une source de chaleur perdue à un niveau supérieur au moyen d'un transformateur de chaleur par absorption, utilisant un mélange de substances selon la revendication 1, consistant en un agent de transport et en un solvant, **caractérisé** en ce que l'on évapore l'agent de transport du mélange de substances par apport de la chaleur perdue à des températures de 100°C à 160°C et sous des pressions de 1,3 à 5,5 bars, en ce que l'on absorbe dans le solvant la vapeur avec dégagement de chaleur à des températures comprises entre 140°C et 240°C, en ce que l'on effectue une expansion du solvant enrichi en l'agent de transport, en ce que l'on sépare l'agent de transport du solvant enrichi par apport de la chaleur perdue à des températures comprises entre 100°C et 160°C et sous des pressions comprises entre 0,1 bar et 0,4 bars, et en ce qu'on le condense avec libération de chaleur à des températures comprises entre 0°C et 30°C, en ce que l'on conduit l'agent de transport liquide vers l'étape d'évaporation avec une élévation de pression jusqu'à 1,3 à 5,5 bars, et en ce que l'on conduit le solvant appauvri en agent de transport, vers l'étape d'absorption, avec une élévation de pression jusqu'à 1,3 bar à 5,5 bars.

9. Procédé selon la revendication 7, **caractérisé** en ce que l'on utilise la triéthylamine et l'acide isononanoïque comme mélange de substances.

10. Procédé selon la revendication 8, **caractérisé** en ce que l'on utilise la triéthylamine et l'acide isononanoïque comme mélange de substances.

**Fig. 1**

Fig. 2